# EUROPÄISCHE PATENTSCHRIFT

(11) **EP 0 883 480 B1**
(45) Veröffentlichungstag und Bekanntmachung des Hinweises auf die Patenterteilung: **15.05.2002**
(21) Anmeldenummer: 97902170.6
(22) Anmeldetag: 13.01.1997
(51) Int. Cl.: B29C 53/02

(54) **VERFAHREN UND VORRICHTUNG ZUM BIEGEN EINES BAUTEILS AUS EINEM THERMOPLASTISCHEN KUNSTSTOFF**
PROCESS AND APPARATUS FOR BENDING A THERMOPLASTIC COMPONENT
PROCEDE ET DISPOSITIF POUR CINTRER UN COMPOSANT EN MATIERE THERMOPLASTIQUE

(30) Priorität: 24.02.1996 DE 19607069
(43) Veröffentlichungstag der Anmeldung: 16.12.1998
(73) Patentinhaber: Braun GmbH, Kronberg (DE)
(72) Erfinder: KASTL, Hans, D-61462 Königstein (DE); SCHENK, Ulrich, D-61440 Oberursel (DE); JOHNE, Karlheinz, D-65207 Wiesbaden (DE); MAJTHAN, Rudolf, D-65760 Eschborn (DE)
(74) Vertreter: Vorbeck, Wolfgang Ernst August, Dr.
(86) Internationale Anmeldenummer: EP9700129
(87) Internationale Veröffentlichungsnummer: WO9730834

(56) Entgegenhaltungen:
- WO-A-93/11730
- DE-A- 3 322 716
- DE-A- 3 939 352
- FR-A- 2 639 534
- FR-A- 2 702 991
- US-A- 3 719 737
- US-A- 5 100 319
- PATENT ABSTRACTS OF JAPAN vol. 013, no. 036 (M-790), 26.Januar 1989 & JP 63 247020 A (MITSUBISHI PLASTICS IND LTD), 13.Oktober 1988,

## Beschreibung

Die Erfindung betrifft ein Verfahren nach dem Oberbegriff des Anspruchs 1 und eine Vorrichtung nach dem Oberbegriff von Anspruch 11 zum Biegen eines Bauteils aus einem thermoplastischen Kunststoff, insbesondere eines hülsenförmigen Bauteils mit einem geraden Schaft. Das Bauteil findet Verwendung in einem Gerät des persönlichen Bedarfs, wie beispielsweise einem Zahnreinigungs-, einem Haarpflege-, einem Küchengerät oder ähnlichem.

Zur Herstellung großer Stückzahlen von Kunststoffbauteilen werden üblicherweise Kunststoffspritzverfahren angewandt. Diese ermöglichen eine relativ einfache und kostengünstige Herstellung von geometrisch einfach ausgeführten Bauteilen. Die Erzeugung geometrisch aufwendiger Bauteile mit beispielsweise mehreren Öffnungen, Hinterschneidungen oder kleinsten Abmessungen wird mittels der bekannten Spritzgießverfahren jedoch schwierig oder nicht praktikabel. Als Alternative zur Herstellung dieser geometrisch aufwendig geformten Kunststoffteile bietet sich an, diese Bauteile aus mehreren Einzelteilen, welche separat gespritzt werden, zu montieren. Da dieser Weg der Herstellung jedoch sehr aufwendig und, insbesondere für große Stückzahlen, kostenintensiv ist, sucht man für die Herstellung von beispielsweise gebogenen rohrförmigen Kunststoffteilen eine Alternative zu dem mehrstückigen Herstellungsverfahren.

Aus den Patent Abstracts of Japan, Vol. 013, No. 036 (M-790) und JP-A63247020 sind bereits eine Vorrichtung sowie ein Verfahren zum Verbiegen einer Röhre aus Kunststoff mit den eingangs genannten Merkmalen bekannt. Hierzu wird die Röhre an den beiden freien Enden mit Haltern fixiert. Weiterhin wird die umzuformende Röhre von innen wie von außen durch Heißluft sowie eine Heizmatte erwärmt, bis der Kunststoff weich wird. Anschließend wird ein Stempel etwa mittig zwischen den beiden Haltern auf die Röhre hin verfahren, um diese umzuformen bzw. zu biegen. Der Stempel selbst ist federelastisch gelagert, wodurch der Querschnitt der Röhre während des Umformvorganges im wesentlichen beibehalten werden soll.

Aus der FR 2 702 991 A1 ist ein Kunststoffwellschlauch mit mehreren ungewellten Abschnitten bekannt, der beispielsweise als Auspuff bei Kraftfahrzeugen zum Einsatz kommt. Dieser zunächst gerade Wellschlauch wird mittels Halterungen im Bereich der geraden Abschnitte in einer speziellen, dem jeweiligen Einsatzzweck angepaßten gebogenen Form eingespannt. Anschließend werden die Wellschlauchabschnitte zwischen den Einspannstellen mittels Heißluft erwärmt, so daß die Wellschlauchabschnitte in der individuellen gebogenen Form fixiert werden.

Schließlich ist aus der WO 93/11730 ein Bauteil bestehend aus einem thermoplastischen Kunststoff mit einem hohlzylindrischen Körper und einer kegelstumpfförmigen Spitze bekannt, bei dem ein Schaft in einem mittleren Bereich umgebogen ist.

Aufgabe der vorliegenden Erfindung ist es, ein einfaches Verfahren sowie eine einfache Vorrichtung zur Umformung eines Bauteils aus einem thermoplastischen Kunststoff anzugeben, wobei insbesondere ein gebogenes hülsenförmiges Bauteil mit einem geraden Schaft hergestellt werden soll. Dabei ist darauf zu achten, daß wesentliche Abmessungen, wie beispielsweise der Querschnitt des Bauteils oder auch eine Bohrung von wenigen Zehntel Millimetem Durchmesser bei diesem Verfahren erhalten bleiben. Das anzugebende Verfahren, die Vorrichtung sowie das Bauteil sollen kostengünstig durchführbar bzw. herstellbar sein, damit diese insbesondere für die Herstellung von Produkten in größter Stückzahl geeignet sind.

Bezüglich des Verfahrens gemäß Anspruch 1 wird diese Aufgabe dadurch gelöst, daß wenigstens zwei Werkzeuge zur Umformung vorgesehen sind, wobei wenigstens das eine Werkzeug auf das andere Werkzeug hin bewegt und das Bauteil zwischen den Werkzeugen im umgeformten Zustand etwa so lange gehalten wird, bis das Bauteil durch eine wenigstens einem der Werkzeuge zugeordnete Heizeinrichtung auf etwa die Erweichungstemperatur des Kunststoffs erhitzt ist. Mit Vorteil wird durch dieses Verfahren das umzuformende Bauteil bei Raumtemperatur oder auch gering erhöhter Umgebungstemperatur in "kaltem Zustand" durch ein Werkzeug über ein Formwerkzeug gebogen. Um ein Zurückweichen des so gebogenen Bauteils nach dem Öffnen der Werkzeuge zu vermeiden, wird das Bauteil nach der Umformung durch Erhitzen in einen spannungsfreien Zustand gebracht. Dazu wird das Bauteil in dem umgeformten Zustand gehalten und durch eine Heizeinrichtung auf wenigstens Erweichungstemperatur erhitzt. Somit ist vorteilhafterweise eine bleibende Verformung des einstückig hergestellten Kunststoffbauteils erreicht.

Zur Herstellung eines, beispielsweise um 90° gebogenen rohrförmigen Bauteils wird vorteilhafterweise ein inneres Formwerkzeug verwendet. Das innere Formwerkzeug, welches den Innenradius des Bauteils definiert, liegt dabei in einer Anschlagposition wenigstens bereichsweise an dem umzuformenden Bauteil an. Damit wird mit Vorteil erreicht, daß jedes umzuformende Bauteil in eine definierte Lage zu dem Formwerkzeug bringbar ist.

Nachdem das umzuformende Bauteil in einer definierten Anschlagposition an dem inneren Formwerkzeug anliegt, wird das Bauteil vorteilhafterweise durch ein Biegewerkzeug um das stehende innere Formwerkzeug herumgebogen, so daß nur noch die Bewegung des Biegewerkzeugs um das ruhende innere Formwerkzeug erforderlich ist.

Vorteilhafterweise liegt das gebogene Bauteil an wenigstens zwei Anlageflächen des inneren Formwerkzeuges an. Dadurch wird eine exakte Führung des Bauteils an dem Formwerkzeug erreicht, welches eine gute Reproduzierbarkeit des Biegevorgangs ermöglicht. Desweiteren ist die Ausbildung der zwei Anlageflächen am Anfang und am Ende des umzuformenden Bereichs des Bauteils von großem Vorteil, da so ein knickfreies Biegen des Bauteils sicher durchführbar ist.

Von Vorteil ist, daß das Biegewerkzeug oder das äußere Formwerkzeug bei dem Biegevorgang eine abrollende Bewegung an dem umzuformenden Bauteil ausführt. Dies ermöglicht eine besonders präzise und verschleißfreie Umformung des Bauteils.

Während des Umformvorgangs führen die Werkzeuge eine linien- oder bogenförmige Bewegung aus. Dadurch wird der kürzeste Weg der Werkzeuge ermöglicht, wobei die Werkzeuge vorteilhafterweise während des Biegevorgangs immer in Kontakt mit dem umzuformenden Bauteil sind.

In einem weiteren Verfahrensschritt wird das äußere Formwerkzeug, welches bislang noch nicht zum Einsatz gekommen ist, an das gebogene Bauteil herangeführt.

Vorteilhafterweise wird das innere und das äußere Formwerkzeug im wesentlichen flächig an dem umgeformten Bauteil zur Anlage gebracht. So wird mit Vorteil eine möglichst große Anlagefläche der Werkzeuge an dem Bauteil erreicht.

Ein weiterer Vorteil besteht darin, daß das umgeformte Bauteil direkt durch ein Formwerkzeug erhitzbar ist. Dazu ist das Formwerkzeug als Heizeinrichtung ausgebildet.

Durch ein Angreifen des Haltemittels an dem geraden Schaft des Bauteiles wird vorteilhafterweise ein einfaches und sicheres Halten des Bauteils während des Umformverfahrens ermöglicht.

Hinsichtlich der Vorrichtung gemäß Anspruch 11 wird die eingangs genannte Aufgabe dadurch gelöst, daß die Vorrichtung wenigstens zwei Werkzeuge zum Umformen aufweist und das eine Werkzeug auf das andere Werkzeug hin bewegbar ist und wenigstens eines der Werkzeuge eine Heizeinrichtung zur Erwärmung des Bauteils im umgeformten Zustand aufweist.

Eine Ausbildung dieser Vorrichtung sieht vor, daß wenigstens ein Formwerkzeug eine Anlagefläche zur Positionierung des umzuformenden Bauteils aufweist. Diese Anlagefläche kann beispielsweise eine ebene Fläche sein, welche mit einer Anlagefläche des umzuformenden Bauteils korrespondiert.

Weiterhin wird vorgeschlagen, die Formwerkzeuge mit Führungsnuten zur Aufnahme des umzuformenden Bauteils zu versehen. Durch die Ausbildung der Führungsnuten mit nur geringem Übermaß gegenüber der Außenabmessung des umzuformenden Bereichs des Bauteils wird vorteilhafterweise eine exakte Führung des Bauteils an diesem Formwerkzeug ermöglicht.

Besonders zweckmäßig ist es, daß das Formwerkzeug als ein inneres oder ein äußeres Formwerkzeug ausgebildet ist, wobei beide Formwerkzeuge mit korrespondieren Formflächen ausgebildet sind. Durch diese Formflächen wird eine exakte Anlage des umzuformenden Bauteils in dem Werkzeug während des Umformens sichergestellt.

Durch die Ausbildung der korrespondierenden Formflächen als Kreisbogenabschnitte wird vorteilhafterweise die Umformung des Bauteils mit einem kreisbogenförmigen Bereich ermöglicht.

Vorteilhafterweise weist die Formfläche des inneren Formwerkzeugs einen kleineren Radius auf als die Formfläche des äußeren Formwerkzeugs. Der Radius der inneren Formfläche entspricht dabei dem inneren Radius des umgeformten Bauteils im Endzustand.

Um einen spannungsfreien Zustand des kalt umgeformten Bauteils zu erreichen, ist vorteilhafterweise wenigstens ein Formwerkzeug beheizbar. So wird das innere Formwerkzeug beispielsweise nach dem Kaltumformen geheizt oder das erhitzte äußere Formwerkzeug nach dem Kaltumformen in Anlage zu dem umgeformten Bauteil gebracht.

Vorteilhafterweise sind beide Formwerkzeuge beheizbar ausgeführt. Damit kann eine schnelle und direkte Beheizung des umgeformten Bauteils durch beide Werkzeuge erzielt werden.

Eine weitere Ausbildung sieht vor, daß wenigstens ein Formwerkzeug federbelastbar ist. Vorteilhafterweise ist dies das äußere Formwerkzeug, da dieses nach dem Erwärmen des umgeformten Bauteils dem an die Formfläche des inneren Formwerkzeuges zurückweichenden Bauteil nachgeführt werden muß.

Alternativ wird vorgeschlagen, eine separate Heizeinrichtung, insbesondere eine Infrarot-, eine Laserheizeinrichtung oder ähnliches vorzusehen. Damit wird vorteilhafterweise die konstruktive Trennung von Formwerkzeug und Heizeinrichtung ermöglicht.

Die Haltemittel zur Aufnahme des geraden Schaftes des umzuformenden Bauteils sind vorteilhafterweise als Haltedorn, Spannzange oder ähnliches Bauteil ausgebildet.

Weitere Merkmale, Vorteile und Anwendungsmöglichkeiten der Erfindung ergeben sich aus der nachfolgenden Beschreibung von Ausführungsbeispielen, die in den Zeichnungen näher dargestellt sind.

Es zeigen:
- Fig. 1: ein gerades Bauteil vor der Umformung mit zwei Formwerkzeugen in Schnittdarstellung,
- Fig. 2: ein Bauteil nach der Umformung mit zwei Formwerkzeugen in teilweise geschnittener Darstellung,
- Fig. 3: ein Bauteil nach der Umformung mit drei Formwerkzeugen in teilweise geschnittener Darstellung,
- Fig. 4: eine Darstellung ähnlich Figur 3, jedoch mit Darstellung einer Druckfeder und der Wärmestrahlung,
- Fig. 5: zwei Formwerkzeuge in Anlage und in geschnittener Darstellung und
- Fig. 6: eine erfindungsgemäße Vorrichtung in schematischer und verkleinerter Darstellung.

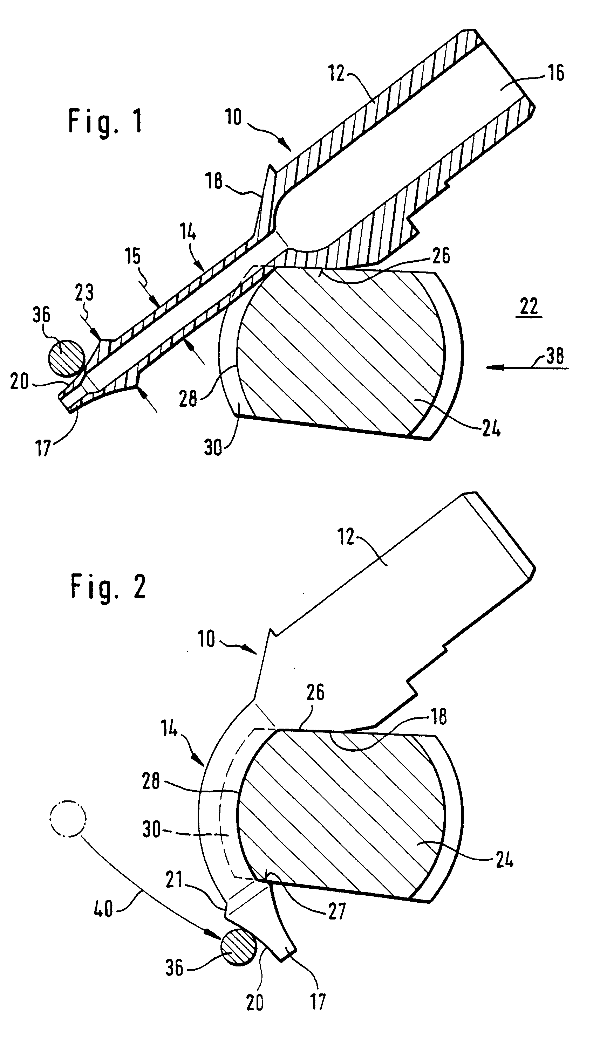

Ein hülsenförmiges und im wesentlichen rotationssymmetrisches Bauteil 10 (Figur 1) besteht aus einem geraden Schaft 12 und einem sich an diesen anschließenden umzuformenden Bereich 14 mit geringerem Durchmesser 15. An das Ende des umzuformenden Bereichs 14 schließt sich eine kegelförmige Spitze 17 an. Im Übergangsbereich zwischen dem Schaft 12 und dem umzuformenden Bereich 14 ist eine kegelstumpfförmige Anlagefläche 18 vorgesehen. Der größte Durchmesser 23 der kegelförmigen Spitze 17 ist dabei größer als der Durchmesser 15 des Bereichs 14. Das gesamte Bauteil 10 ist mit einer gestuften Bohrung 16 versehen, welche ihren kleinsten Durchmesser im Bereich der Spitze 17 des Bauteils 10 aufweist. Das Bauteil 10 kann beispielsweise als einstückiges Kunststoffspritzteil hergestellt sein.

Ein inneres Formwerkzeug 24 bildet den Anschlag für den Innenradius des umzuformenden Bereichts 14 und hat im wesentlichen die Form eines kreisscheibenartigen Segments mit einer geraden Anlagefläche 26. Die kreisbogenförmigen Abschnitte dieses Werkzeuges 24 bilden eine Formfläche 28, welche mit einer ebenfalls kreisbogenförmigen Führungsnut 30 zur Aufnahme des umzuformenden Bereichs 14 ausgebildet sind. Das umzuformende Bauteil 10 ist durch eine in dieser Figur nicht dargestellte Haltevorrichtung in der gezeigten Position fixiert und das Formwerkzeug 24 wird in Richtung 38 auf das Bauteil 10 bis in die dargestellte Anschlagposition 22 bewegt, so daß die Anlagefläche 26 des Werkzeugs 24 an der Aniagefläche 18 des Bauteils 10 zum Anliegen kommt.

An der kegelstumpfförmigen Anlagefläche 20 der Spitze 17 wird ein weiteres Formwerkzeug, beispielsweise ein rollenförmiges Biegewerkzeug 36 angelegt.

Dieses Biegewerkzeug 36 (Figur 2) wird in einer bogenförmigen Bewegung in Richtung 40 auf das Formwerkzeug 24 zubewegt und biegt somit den umzuformenden Bereich 14 in die Führungsnut 30 bis zur Anlage an der Formfläche 28 des Formwerkzeuges 24. Während dieses Umformvorgangs verbleibt der gerade Schaft 12 in seiner Ausgangsposition, so daß die kegelstumpfförmige Anlagefläche 18 des Bauteils 10 auf der ebenen Anlagefläche 26 des Formwerkzeugs 24 anliegt. Nach Beendigung des Biegevorgangs kommt die ebenfalls kegelstumpfförmige Anlagefläche 21 der Spitze 17 an der zweiten geraden Anlagefläche 27 des Werkzeugs 24 zum Anschlag. Das Biegewerkzeug 36 rollt während des Biegevorgangs an der kegelförmigen vorderen Anlagefläche 20 der Spitze 17 entlang.

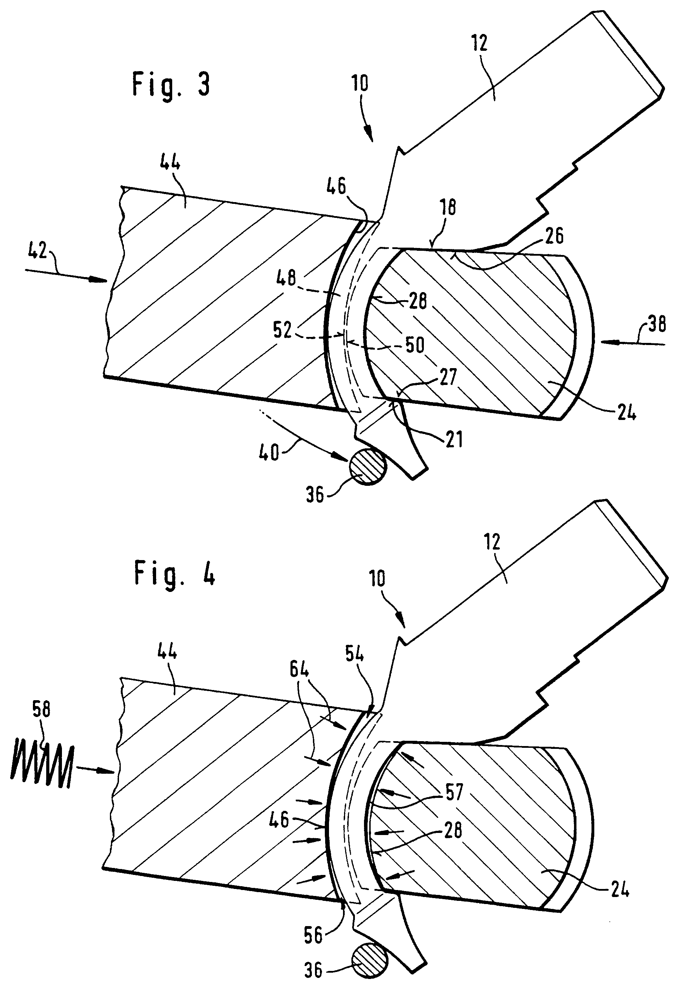

Nach dem Biegen (Figur 3) verbleibt das Biegewerkzeug 36 zunächst in seiner Endposition und hält somit das umgeformte Bauteil an der Formfläche 28 des inneren Formwerkzeugs 24 in der Anlage. Da das Bauteil 10 bei Raumtemperatur bzw. bei geringfügig überhöhter Temperatur von maximal ca. 50°C gebogen wird, wird nun die Vorspannung in dem Bauteil 10 durch Erhitzen in dem gebogenen Zustand entfernt. Hierzu wird ein äußeres Formwerkzeug 44 in Bewegungsrichtung 42 auf das Bauteil 10 zubewegt. Das äußere Formwerkzeug 44 weist dabei ebenso eine Formfläche 46 und eine Führungsnut 48 wie das innere Formwerkzeug 24 auf. Die korrespondierenden Anlageflächen 18, 26 sowie 21, 27 bleiben ständig in Berührung. Nachdem in dem Bauteil 10 ein spannungsfreier Zustand hergestellt wurde, werden die Werkzeuge 24, 36 und 44 entgegengeseetzt den dargestellten Bewegungsrichtungen 38, 40 und 42 wieder von dem Bauteil 10 wegbewegt.

Zur Wärmeeinbringung (Figur 4) in das umgeformte Bauteil 10 können beispielsweise die inneren und äußeren Formwerkzeuge 24 und 44 direkt erhitzt werden. Dadurch kann eine Wärmestrahlung 64 von dem Formflächen 28 und 46 auf den umgeformten Bereich des Bauteils 10 übertragen werden. Da das kalt umgeformte Bauteil 10 seine endgültige Form noch nicht erreicht hat, stellen sich vor dem Erhitzen Spalte 54, 56 und 57 zwischen dem Bauteil 10 und den Formwerkzeugen 24, 44 ein. Nachdem das Bauteil 10 die notwendige Erweichungstemperatur des Kunststoffs erreicht hat, wird das äußere Formwerkzeug 44 durch die Kraft einer Druckfeder 58 in Richtung auf das innere Formwerkzeug 24 zubewegt. Dadurch wird erreicht, daß der innere bogenförmige Bereich des Bauteils 10 an der Formfläche 28 des Werkzeugs 24 ganzflächig zur Anlage kommt und der Spalt 57 ausgefüllt ist.

Der Hauptwärmefluß bei Erhitzung des umgeformten Bauteils 10 erfolgt an den Anlagestellen des Formwerkzeugs zu dem Bauteil, so daß ein verstärkter Wärmeübergang vom inneren Formwerkzeug 24 zu dem Bauteil 10 in den äußeren Randbereichen der Formfläche 28 und der Wärmeübergang von dem äußeren Formwerkzeug 44 zu dem Bauteil 10 in einem mittleren Bereich stärker als in den Randbereichen auftritt.

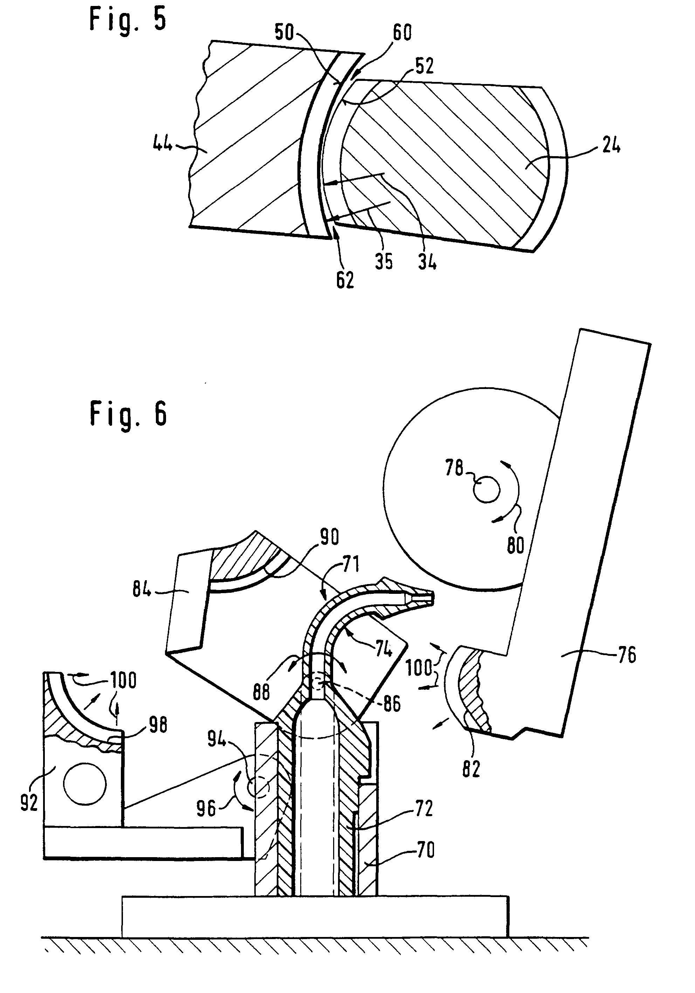

Die beiden korrespondierenden Stirnflächen 50, 52 (Figur 5) der Werkzeuge 24, 44 weisen unterschiedliche Radien 34, 35 auf. Dadurch kommen die Stirnflächen 50, 52 nur in einem mittleren Bereich der beiden Werkzeuge 24, 44 zur Anlage, während in den beiden äußeren Bereichen sich jeweils ein zwickelförmiger Spalt 60, 62 einstellt.

Eine mögliche Ausführungsform einer erfindungsgemäßen Vorrichtung (Figur 6) basiert auf einem Haltemittel 70, welches den Schaft 72 eines umzuformenden Bauteils 71 umgreift und von dem umzuformenden Bereich 74 überragt wird. Ein inneres Formwerkzeug 76 ist um eine Achse 78 in Drehrichtung 80 drehbar angeordnet. Am Ende des Werkzeugs 76 ist die Formfläche 82 zur Bildung des inneren Biegeradius vorgesehen.

Ein Biegewerkzeug 84 ist um eine Achse 86 drehbar gelagert und in beiden Drehrichtungen 88 beweglich angeordnet. Die Formfläche 90 wird durch eine Schwenkbewegung auf die kegelförmige Spitze des umzuformenden Bereichs 74 in Anlage gebracht.

Ein äußeres Formwerkzeug 92 ist um eine Achse 94 schwenkbar gelagert und in Drehrichtung 96 beweglich. Die Formfläche 98 ist durch eine Schwenkbewegung auf den äußeren gebogenen Teil des umgeformten Bereichs 24 bewegbar.

Die Formflächen 82 und 98 sind als Heizeinrichtung vorgesehen und geben eine Wärmestrahlung 100 in Richtung auf das umgeformte Bauteil 71 ab.

## Patentansprüche

1. Verfahren zum Biegen eines Bauteils aus einem thermoplastischen Kunststoff mit einem geraden Schaft (12,72), wobei man das umzuformende Bauteil (10, 71) in einem Haltemittel (70) anordnet und den umzuformenden Bereich (14, 74) des Bauteils (10, 71) durch Werkzeuge umformt, **dadurch gekennzeichnet, daß** wenigstens zwei Werkzeuge zur Umformung vorgesehen sind, wobei wenigstens das eine Werkzeug auf das andere Werkzeug hin bewegt und das Bauteil (10, 71) zwischen den Werkzeugen (24, 36, 44, 76, 92) im umgeformten Zustand etwa so lange gehalten wird, bis das Bauteil durch eine wenigstens einem der Werkzeuge zugeordnete Heizeinrichtung auf etwa die Erweichungstemperatur des Kunststoffs erhitzt ist.

2. Verfahren nach Anspruch 1, **dadurch gekennzeichnet, daß** man das innere Formwerkzeug (24, 76), in einer Anschlagposition (22) wenigstens bereichsweise an das Bauteil (10, 71) anlegt.

3. Verfahren nach einem der Ansprüche 1 oder 2, **dadurch gekennzeichnet, daß** man das Bauteil (10, 71) durch das Biegewerkzeug (36) um das innere Formwerkzeug (24, 76) biegt.

4. Verfahren nach einem der vorhergehenden Ansprüche, **dadurch gekennzeichnet, daß** man das gebogene Bauteil (10, 71) an wenigstens zwei Anlageflächen (18, 27) des inneren Formwerkzeugs (24) anlegt.

5. Verfahren nach einem der vorhergehenden Ansprüche, **dadurch gekennzeichnet, daß** man das Biegwerkzeug (36) oder das äußere Formwerkzeug (44, 92) an dem umzuformenden Bauteil (10, 71) eine abrollende Bewegung ausführen läßt.

6. Verfahren nach einem der vorhergehenden Ansprüche, **dadurch gekennzeichnet, daß** man die Werkzeuge (24, 36, 44, 76, 92) in einer linien- oder bogenförmigen Bewegung führt.

7. Verfahren nach einem der vorhergehenden Ansprüche, **dadurch gekennzeichnet, daß** man das äußere Formwerkzeug (44, 92) an das gebogene Bauteil (10,71) heranführt.

8. Verfahren nach einem der vorhergehenden Ansprüche, **dadurch gekennzeichnet, daß** man das innere und äußere Formwerkzeug (24, 44, 76, 92) im wesentlichen flächig an dem umgeformten Bauteil (10, 71) anlegt.

9. Verfahren nach einem der vorhergehenden Ansprüche, **dadurch gekennzeichnet, daß** man das Bauteil (10, 71) durch wenigstens ein Formwerkzeug (24, 44, 76, 92) bevorzugt durch beide, erhitzt.

10. Verfahren nach einem der vorhergehenden Ansprüche, **dadurch gekennzeichnet, daß** das Haltemittel (70) am Schaft (12,72) des Bauteils (10, 71) angreift.

11. Vorrichtung zum Biegen eines Bauteils (71) aus thermoplastischem Kunststoff mit einem geraden Schaft, wobei ein Haltemittel (70) für das Bauteil (10, 71) und Werkzeuge zur Umformung des umzuformenden Bereichs (14, 74) des Bauteils (10, 71) vorgesehen sind, **dadurch gekennzeichnet, daß** die Vorrichtung wenigstens zwei Werkzeuge (24, 36, 44, 76, 92) zum Umformen aufweist und das eine Werkzeug (36, 44, 92) auf das andere Werkzeug (24, 76) hin bewegbar ist und wenigstens eines der Werkzeuge (24,36, 44, 76, 92) eine Heizeinrichtung zur Erwärmung des Bauteils (10, 71) im umgeformten Zustand aufweist.

12. Vorrichtung nach Anspruch 11, **dadurch gekennzeichnet, daß** das Formwerkzeug (24) wenigstens eine Anlagefläche (26,27) zur Positionierung des umzuformenden Bauteils (10, 71) aufweist.

13. Vorrichtung nach einem der Ansprüche 11 oder 12, **dadurch gekennzeichnet, daß** das Formwerkzeug (24,44) eine Führungsnut (30,48) zur Aufnahme des umzuformenden Bauteils (10,71) aufweist.

14. Vorrichtung nach einem der Ansprüche 11 bis 13, **dadurch gekennzeichnet, daß** das innere oder das äußere Formwerkzeug (24,44,76,92) und/oder das Biegewerkzeug (36) mit korrespondierenden Formflächen (28,46) ausgebildet sind.

15. Vorrichtung nach einem der Ansprüche 11 bis 14, **dadurch gekennzeichnet, daß** die korrespondierenden Formflächen (28,46) der inneren und äußeren Formwrekzeuge (24,44,76,92) als Kreisbogenabschnitte ausgebildet sind.

16. Vorrichtung nach Anspruch 15, **dadurch gekennzeichnet, daß** die Formfläche (28) des inneren Formwerkzeuges (24) einen kleineren Radius (34) aufweist als die Formfläche (46) des äußeren Formwerkzeuges (44).

17. Vorrichtung nach einem der Ansprüche 11 bis 16, **dadurch gekennzeichnet, daß** wenigstens ein Formwerkzeug (24,44,76,92) beheizbar ist.

18. Vorrichtung nach einem der Ansprüche 11 bis 16, **dadurch gekennzeichnet, daß** beide Formwerkzeuge (24,44,76,92) beheizbar sind.

19. Vorrichtung nach einem der Ansprüche 11 bis 18, **dadurch gekennzeichnet, daß** wenigstens ein Formwerkzeug (24,44,76,92), vorzugsweise das äußere Formwerkzeug (44), durch Federkraft auf das Bauteil (10,71) hin bewegbar ist.

20. Vorrichtung nach einem der Ansprüche 11 bis 19, **dadurch gekennzeichnet, daß** eine separate Heizeinrichtung, insbesondere eine Infrarot-, eine Laserheizeinrichtung oder ähnliches vorgesehen ist.

21. Vorrichtung nach einem der Ansprüche 11 bis 20, **dadurch gekennzeichnet, daß** die Haltemittel (70) als Haltedorn, Spannzange oder ähnliches ausgebildet sind.

22. Verfahren nach einem der Ansprüche 1 bis 10, **dadurch gekennzeichnet, daß** das Bauteil (10, 71) ein hülsenförmiges Bauteil ist.

23. Verfahren nach einem der Ansprüche 1 bis 10, **dadurch gekennzeichnet, daß** die Werkzeuge als inneres und äußeres Formwerkzeug (24, 44, 76, 92) oder Biegewerkzeug (36) ausgebildet sind.

24. Verfahren nach einem der Ansprüche 1 bis 10, **dadurch gekennzeichnet, daß** das Bauteil (10, 71) aus PC, PP, SAN besteht.

25. Vorrichtung nach einem der Ansprüche 11 bis 21, **dadurch gekennzeichnet, daß** das Bauteil (10, 71) ein hülsenförmiges Bauteil ist.

26. Vorrichtung nach einem der Ansprüche 11 bis 21, **dadurch gekennzeichnet, daß** die Werkzeuge als inneres und äußeres Formwerkzeug (24, 44, 76, 92) oder Biegewerkzeug (36) ausgebildet sind.

27. Vorrichtung nach einem der Ansprüche 11 bis 21, **dadurch gekennzeichnet, daß** das Bauteil (10, 71) aus PC, PP, SAN besteht.

## Claims

1. A method for bending a component made of a thermoplastic material and having a straight shank (12, 72), wherein the component (10, 71) to be formed is arranged in a holding device (70), and the section (14, 74) of the component (10, 71) to be formed is shaped by means of tools, **characterized in that** provision is made for at least two forming tools, wherein at least the one tool is moved toward the other tool, and the component (10, 71) is held between the tools (24, 36, 44, 76, 92) in its condition as formed for about a period of time until the component is heated to about the softening temperature of the plastic by a heating unit associated with at least one of said tools.

2. The method as claimed in claim 1, **characterized in that** it includes the step of bringing the inner forming tool (24, 76), in a stop position (22), at least in partial engagement with the component (10, 71).

3. The method as claimed in any one of the claims 1 or 2, **characterized in that** it includes the step of bending the component (10, 71) by means of the bending tool (36) around the inner forming tool (24, 76).

4. The method as claimed in any one of the preceding claims, **characterized in that** it includes the step of bringing the bent component (10, 71) in contact with at least two engagement surfaces (18, 27) of the inner forming tool (24).

5. The method as claimed in any one of the preceding claims, **characterized in that** it includes the step of causing the bending tool (36) or the outer forming tool (44, 92) to execute a rolling motion on the component (10, 71) to be formed.

6. The method as claimed in any one of the preceding claims, **characterized in that** it includes the step of guiding the tools (24, 36, 44, 76, 92) in a linear or arcuate motion.

7. The method as claimed in any one of the preceding claims, **characterized in that** it includes the step of moving the outer forming tool (44, 92) up to the bent component (10, 71).

8. The method as claimed in any one of the preceding claims, **characterized in that** it includes the step of bringing the inner and the outer forming tool (24, 44, 76, 92) into essentially snug engagement with the formed component (10, 71).

9. The method as claimed in any one of the preceding claims, **characterized in that** it includes the step of heating the component (10, 71) by at least one forming tool (24, 44, 76, 92), preferably by both forming tools.

10. The method as claimed in any one of the preceding claims, **characterized in that** it includes the step of causing the holding device (70) to engage on the shank (12, 72) of the component (10, 71).

11. A device fore bending a component (71) made of a thermoplastic material and having a straight shank, wherein provision is made for a holding device (70) for the component (10, 71), and for tools for forming the area (14, 74) of the component (10, 71) needing to be shaped, **characterized in that** the device includes at least two tools (24, 36, 44, 76, 92) for forming, and that the one tool (36, 44, 92) is movable toward the other tool (24, 76), and at least one of said tools (24, 36, 44, 76, 92) has a heating unit for heating the component (10, 71) in its condition as formed.

12. The device as claimed in claim 11, **characterized in that** the forming tool (24) includes at least one engagement surface (26, 27) for positioning the component (10, 71) to be formed.

13. The device as claimed in any one of the claims 11 or 12, **characterized in that** the forming tool (24, 44) is provided with a guide groove (30, 48) for receiving the component (10, 71) to be formed.

14. The device as claimed in any one of the claims 11 to 13, **characterized in that** the inner or the outer forming tool (24, 44, 76, 92) and/or the bending tool (36) are provided with corresponding forming faces (28, 46).

15. The device as claimed in any one of the claims 11 to 14, **characterized in that** the corresponding forming faces (28, 46) of the inner and outer forming tools (24, 44, 76, 92) are configured as sections of a circular arc.

16. The device as claimed in claim 15, **characterized in that** the forming face (28) of the inner forming tool (24) has a smaller radius (34) than the forming face (46) of the outer forming tool (44).

17. The device as claimed in any one of the claims 11 to 16, **characterized in that** at least one forming tool (24, 44, 76, 92) is heatable.

18. The device as claimed in any one of the claims 11 to 16, **characterized in that** both forming tools (24, 44, 76, 92) are heatable.

19. The device as claimed in any one of the claims 11 to 18, **characterized in that** at least one forming tool (24, 44, 76, 92), preferably the outer forming tool (44), is movable toward the component (10, 71) by spring force.

20. The device as claimed in any one of the claims 11 to 19, **characterized in that** provision is made for a separate heating unit, in particular an infrared, a laser or similar heating unit.

21. The device as claimed in any one of the claims 11 to 20, **characterized in that** the holding device (70) is configured as a mounting mandrel, a collet chuck or the like.

22. The method as claimed in any one of the claims 1 to 10, **characterized in that** the component (10, 71) is a sleeve-shaped component.

23. The method as claimed in any one of the claims 1 to 10, **characterized in that** the tools are configured as inner and outer forming tool (24, 44, 76, 92) or bending tool (36).

24. The method as claimed in any one of the claims 1 to 10, **characterized in that** the component (10, 71) is made of PC, PP, SAN.

25. The device as claimed in any one of the claims 11 to 21, **characterized in that** the component (10, 71) is a sleeve-shaped component.

26. The device as claimed in any one of the claims 11 to 21, **characterized in that** the tools are configured as inner and outer forming tool (24, 44, 76, 92) or bending tool (36).

27. The device as claimed in any one of the claims 11 to 21, **characterized in that** the component (10, 71) is made of PC, PP, SAN.

## Revendications

1. Procédé pour le cintrage d'une pièce de construction en matière thermoplastique avec un arbre droit (12, 72), la pièce de construction à façonner (10, 71) étant placée dans un support (70) et le secteur à former (14, 74) de la pièce de construction (10, 71) étant façonné par des outillages, **caractérisé en ce qu'**au moins deux outillages sont prévus pour le façonnage, au moins un des deux outillages se déplaçant sur l'autre outillage et la pièce de construction (10, 71) étant maintenue entre les outillages (24, 36, 44, 76, 92) une fois façonnée, jusqu'à ce que la pièce de construction soit chauffée par un système de chauffage associé à au moins un des outillages pour atteindre à peu près la température de ramollissement du plastique.

2. Procédé selon la revendication 1, **caractérisé en ce que** l'on met l'outillage de formage interne (24, 76) en position de butée (22) au moins sur certains secteurs de la pièce de construction (10, 71).

3. Procédé selon une des revendications 1 ou 2, **caractérisé en ce que** l'on cintre la pièce de construction (10, 71) avec l'outillage de cintrage (36) autour de l'outillage interne de formage (24, 76).

4. Procédé selon une des revendications précédentes, **caractérisé en ce que** la pièce de construction cintrée (10, 71) est posée sur au moins deux surfaces de dépôt (18, 27) de l'outillage interne de formage (24).

5. Procédé selon une des revendications précédentes, **caractérisé en ce que** l'on fait effectuer un mouvement déroulant à l'outillage de cintrage (36) ou à l'outillage externe de formage (44, 92) sur la pièce de construction à façonner (10, 71).

6. Procédé selon une des revendications précédentes, **caractérisé en ce que** l'on guide les outillages (24, 36, 44, 76, 92) dans un mouvement en ligne ou en arc de cercle.

7. Procédé selon une des revendications précédentes, **caractérisé en ce que** l'on approche l'outillage externe de formage (44, 92) de la pièce de construction cintrée (10, 71).

8. Procédé selon une des revendications précédentes, **caractérisé en ce que** l'on met l'outillage de formage interne et externe (24, 44, 76, 92) globalement en contact avec la surface de la pièce de construction façonnée (10, 71).

9. Procédé selon une des revendications précédentes, **caractérisé en ce que** l'on réchauffe la pièce de construction (10, 71) par au moins un outillage de formage (24, 44, 76, 92), de préférence par deux.

10. Procédé selon une des revendications précédentes, **caractérisé en ce que** le support (70) touche l'arbre (12, 72) de la pièce de construction (10, 71).

11. Dispositif pour le cintrage d'une pièce de construction (71) en thermoplastique avec un arbre droit, un support (70) pour la pièce de construction (10, 71) et des outillages pour le formage de la zone à façonner (14, 74) de la pièce de construction (10, 71) étant prévus, **caractérisé en ce que** ce dispositif présente au moins deux outillages (24, 36, 44, 76, 92) pour le façonnage et que l'un des outillages (36, 44, 92) peut être déplacé sur l'autre outillage (24, 76) et qu'au moins un des outillages (24, 36, 44, 76, 92) présente un système de chauffage pour le réchauffement de la pièce de construction (10, 71) une fois façonnée.

12. Dispositif selon la revendication 11, **caractérisé en ce que** l'outillage de formage (24) présente au moins une surface de dépôt (26, 27) pour le positionnement de la pièce de construction à façonner (10, 71).

13. Dispositif selon une des revendications 11 ou 12, **caractérisé en ce que** l'outillage de formage (24, 44) présente une rainure de guidage (30, 48) destinée à recevoir la pièce de construction à façonner (10, 71).

14. Dispositif selon une des revendications 11 à 13, **caractérisé en ce que** l'outillage interne ou externe de formage (24, 44, 76, 92) et/ou l'outillage de cintrage (36) comportent des surfaces de formage correspondantes (28, 46).

15. Dispositif selon une des revendications 11 à 14, **caractérisé en ce que** les surfaces de formage correspondantes (28, 46) de l'outillage interne et externe de formage (24, 44, 76, 92) sont des sections de formes circulaires.

16. Dispositif selon la revendication 15, **caractérisé en ce que** la surface de formage (28) de l'outillage interne de formage (24) présente un rayon plus petit (34) que la surface de formage (46) de l'outillage externe de formage (44).

17. Dispositif selon une des revendications 11 à 16, **caractérisé en ce qu'**au moins un outillage de formage (24, 44, 76, 92) peut être chauffé.

18. Dispositif selon une des revendications 11 à 16, **caractérisé en ce que** les deux outillages de formage (24, 44, 76, 92) peuvent être chauffés.

19. Dispositif selon une des revendications 11 à 18, **caractérisé en ce qu'**au moins un outillage de formage (24, 44, 76, 92), de préférence l'outillage externe de formage (44), peut être déplacé par la force d'un ressort jusqu'à la pièce de construction (10, 71).

20. Dispositif selon une des revendications 11 à 19, **caractérisé en ce qu'**un système de chauffage séparé, tout particulièrement un système de chauffage à infrarouges, à laser ou similaire, est prévu.

21. Dispositif selon une des revendications 11 à 20, **caractérisé en ce que** les supports (70) sont des mandrins de maintien, des pinces de serrage ou similaires.

22. Procédé selon une des revendications 1 à 10, **caractérisé en ce que** la pièce de construction (10, 71) est une pièce de construction en forme de douille.

23. Procédé selon une des revendications 1 à 10, **caractérisé en ce que** les outillages sont des outillages interne et externe de formage (24, 44, 76, 92) ou un outillage de cintrage (36).

24. Procédé selon une des revendications 1 à 10, **caractérisé en ce que** la pièce de construction (10, 71) est en PC, PP, SAN.

25. Dispositif selon une des revendications 11 à 21, **caractérisé en ce que** la pièce de construction (10, 71) est une pièce de construction en forme de douille.

26. Dispositif selon une des revendications 11 à 21, **caractérisé en ce que** les outillages sont un outillage interne et externe de formage (24, 44, 76, 92) ou un outillage de cintrage (36).

27. Dispositif selon une des revendications 11 à 21, **caractérisé en ce que** la pièce de construction (10, 71) est en PC, PP, SAN.
